(19) Europäisches Patentamt
European Patent Office
Office européen des brevets

(11) **EP 2 292 363 B1**

(12) **EUROPÄISCHE PATENTSCHRIFT**

(45) Veröffentlichungstag und Bekanntmachung des Hinweises auf die Patenterteilung:
**04.01.2017 Patentblatt 2017/01**

(51) Int Cl.:
***B23K 9/095*** *(2006.01)*

(21) Anmeldenummer: **09400042.9**

(22) Anmeldetag: **08.09.2009**

(54) **Verfahren und Vorrichtung zum Ermitteln einer Schweiß- oder Lötgeschwindigkeit**

Method and device for determining a welding or soldering speed

Procédé et dispositif de détermination d'une vitesse de soudure ou de brasure

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**09.03.2011 Patentblatt 2011/10**

(73) Patentinhaber: **EWM AG**
**56271 Mündersbach (DE)**

(72) Erfinder: **Szczesny, Michael**
**56235 Ransbach-Baumbach (DE)**

(74) Vertreter: **Steiniger, Carmen**
**Patentanwaltskanzlei Dr. Steiniger**
**Reichsstraße 37**
**09112 Chemnitz (DE)**

(56) Entgegenhaltungen:
**EP-A1- 2 022 592      WO-A1-2007/009131**
**JP-A- S63 290 685      US-A- 4 399 346**

**Beschreibung**

Die vorliegende Erfindung betrifft ein Verfahren und eine Vorrichtung zum Ermitteln einer Schweiß- oder Lötgeschwindigkeit bei einem Schweiß- oder Lötprozess mit einer einen Arbeitskopf, wie einen Brenner oder eine Schweißzange, aufweisenden Schweiß- oder Lötvorrichtung.

Insbesondere bei einem nicht automatisierten Schweiß- oder Lötvorgang kann die Schweiß- oder Lötgeschwindigkeit insbesondere dann, wenn die Fügekonturen nicht linear verlaufen, stark schwanken. Infolge dessen kann die Nahtausbildung eine verminderte Qualität aufweisen, da eine optimale Naht eine im Wesentlichen konstante, von der Schweiß- oder Lötgeschwindigkeit abhängige Streckenenergie voraussetzt. Daher ist es erforderlich, während eines Schweiß- oder Lötprozesses die Schweiß- oder Lötgeschwindigkeit kontinuierlich zu überwachen und darauf basierend eventuelle Schwankungen zu kompensieren.

In der Druckschrift EP 10 77 784 B1 ist ein Verfahren zum Ermitteln der Schweißgeschwindigkeit beschrieben, wobei mittels einer Widerstandsbrücke, gebildet durch drei Messpunkte und einer Steuervorrichtung in Form eines Spannungsteilers, aufgrund der Veränderungen der einzelnen Spannungen auf die Schweißgeschwindigkeit geschlossen werden kann. Dieses Verfahren besitzt den Nachteil, dass für dessen Vorbereitung ein relativ aufwendiges Anbringen von Messkontakten notwendig ist und ferner aufgrund der auftretenden Temperaturschwankungen während des Schweißprozesses eine hohe Messungenauigkeit zu erwarten ist.

Die Druckschrift EP 08 10 3967 A1 beinhaltet ein Verfahren und eine Vorrichtung zur Ermittlung der Schweißgeschwindigkeit bei einem manuell ausgeführten Lichtbogenschweißvorgang. Dabei wird der Lichtbogenschweißvorgang durch eine an einer beweglichen Schutzvorrichtung, wie einem Schweißschutzhelm, angebrachten Detektionseinrichtung detektiert und daraus die Schweißgeschwindigkeit ermittelt.

Die Druckschrift WO 2007/009131 A1 beinhaltet ein Schweißverfahren und ein Schweißsystem für eine Bestimmung einer Position des Schweißbrenners, aus welcher unter anderem auf die Schweißgeschwindigkeit geschlossen werden kann. Zur Durchführung der Positionsbestimmung wird in diesem Verfahren ein Sender verwendet, der ein Signal ausstrahlt, welches von im Schweißbrenner integrierten oder diesem zugeordneten Sensoren empfangen wird und in einer Auswerteeinheit in eine Positionsinformation im dreidimensionalen Raum überführt wird. Die Positionserfassung ist deshalb an Schweißbrennersystemen vorgesehen, um dort eine Qualitätsüberwachung, eine Nachvollziehbarkeit der Schweißnaht sowie eine Schweißparameterzuordnung bei einem Schweißbrennersystem zu erreichen. So ist es möglich, nach Erfassung der Schweißgeschwindigkeit dem Schweißer optisch oder akustisch anzuzeigen, ob Abweichungen des aktuellen Schweißvorganges von gespeicherten Referenzwerten vorliegen.

Die Druckschrift EP 2 022 592 A1 beschreibt ein Verfahren, eine Vorrichtung und ein System zur Ermittlung der Schweißgeschwindigkeit bei einem manuell ausgeführten Lichtbogenschweißvorgang. Hierzu wird eine in einem Schweißerschutzhelm integrierte Kamera verwendet, mit welcher eine Bildfolge aufgenommen wird. Eine Recheneinheit wertet dann die erfassten Bildinformationen aus und berechnet aus den optischen Informationen die Schweißgeschwindigkeit. Desweiteren wird die Regelung des Schweißverfahrens in Abhängigkeit von der Schweißgeschwindigkeit beschrieben, wobei das Verfahren über den Schweißstrom, die Schweißspannung und die Drahtfördergeschwindigkeit beeinflusst werden kann.

Die Druckschrift US 4,399,346 verfolgt das Ziel, die Qualität einer Schweißnaht zu überwachen, indem man insbesondere die Geschwindigkeit, mit welcher die Schweißnaht erzeugt wird, überwacht. Hierfür wird ein erster optischer Sensor nahe dem Schmelzbad angeordnet. Ein zweiter optischer Sensor befindet sich dem ersten Sensor nachgeordnet an der bereits erzeugten Schweißnaht. Durch die beiden optischen Sensoren werden jeweils Temperaturen an den beiden Stellen erfasst. Diese Temperaturen werden einem Komparator übermittelt, der hieraus die Schweißgeschwindigkeit berechnet.

Die Druckschrift JP 63 290685 beschreibt eine Steuerung für eine automatische Schweißanlage mit einem Schweißroboter, wobei die Steuerung die Temperatur der geschweißten Teile sowie über Daten der verwendeten Schweißbrennertreiberquelle oder Encoder-Signale eines Schweißroboters die Schweißgeschwindigkeit erfasst. Die Steuerung berechnet den Wärmeeintrag in die Schweißnaht und steuert die automatische Schweißanlage.

Ferner ist aus der Druckschrift DD 142 677 A1 eine Verfahrensweise bekannt, bei welcher die Schweißgeschwindigkeit durch die Erfassung einer Relativbewegung eines Werkstücks gegenüber dem Schweißbrenner ermittelt wird.

Die Druckschrift EP 1 812 200 B1 beinhaltet eine Vorrichtung zur Ausführung eines Füge-, Trenn- oder Oberflächenbehandlungsverfahrens, wie beispielsweise eines Schweißverfahrens, wobei mithilfe von Sensoren die Lage oder eine Lageänderung eines Arbeitskopfes der Vorrichtung bestimmt wird und wenigstens eine Kenngröße des Füge-, Trenn- oder Oberflächenbehandlungsverfahrens in Abhängigkeit von der abgefühlten Lage und/oder Lageänderung beeinflussbar ist. Als Sensoren zum Ermitteln der jeweiligen Lage bzw. Lageänderung werden in dieser Druckschrift entweder Ultraschall- oder optische Sensoren verwendet. So kann beispielsweise an dem Arbeitskopf ein Ultraschallsensor angeordnet sein, der Ultraschallwellen abstrahlt, die von einem ortsfesten Ultraschallempfänge empfangen werden. Gemäß einer anderen Variante wird der Abstand des Arbeitskopfes von einem Bezugspunkt in dieser Druckschrift mittels eines Laser-Interferometers ermittelt. Die Druckschrift schlägt ferner vor, dass der Sensor die Geschwindigkeit und/oder Beschleunigung einer translatorischen und/oder rotativen Bewegung des Arbeitskopfes abfühlt. Hierzu sollen handelsübliche Beschleunigungssensoren verwendet werden.

Die letztgenannten Vorrichtungen und Verfahren zum Ermitteln der Schweißgeschwindigkeit liefern nur dann verwertbare Ergebnisse, wenn entweder der Schweißbrenner bzw. Arbeitskopf eine feste oder automatisch bestimmbare Position aufweist oder andererseits ein ortsfester, im Raum befindlicher Detektor und eine feste Referenz an dem Brenner oder dem Arbeitskopf vorhanden ist, relativ zu welcher die Schweißgeschwindigkeit ermittelt werden kann. Dies kann jedoch insbesondere bei manuellen Schweiß- oder Lötprozessen nicht immer oder nur mit verhältnismäßig hohem Aufwand realisiert werden, sodass die Anwendbarkeit oben aufgeführter Lösungen beschränkt ist. Die bekannten Vorrichtungen und Verfahren besitzen ferner den Nachteil, dass gerade bei Verwendung einer Ultraschall- bzw. optischen Sensorik zum Erfassen der Lage des Arbeitskopfes die jeweilige Messung durch Hindernisse zwischen Sender und Ultraschall- bzw. optischem Empfänger, welche beim Schweiß- oder Lötprozess sowohl durch das eingesetzte Schutzgas, durch entstehende Abgase, aber auch durch den Werker selbst verursacht werden können, gestört werden kann, sodass ungenaue Messergebnisse erzielt werden.

Es ist daher die Aufgabe der vorliegenden Erfindung, ein Verfahren und eine Vorrichtung zum Ermitteln einer Schweiß- oder Lötgeschwindigkeit und eine entsprechende Schweiß- oder Lötvorrichtung zur Verfügung zu stellen, welche eine möglichst störungsfreie und hochgenaue Bestimmung der Schweiß- oder Lötgeschwindigkeit sowohl bei manuellen als auch bei automatischen Schweiß- oder Lötprozessen weitgehend unabhängig vom jeweiligen Schweiß- oder Lötort ermöglicht, wobei der konstruktive Aufwand zur Messwerterfassung möglichst gering sein soll und die Ermittlung der Schweiß- oder Lötgeschwindigkeit unabhängig von dem jeweils eingesetzten Schweiß- oder Lötverfahren möglich sein soll.

Die Aufgabe wird einerseits durch ein Verfahren zum Ermitteln einer Schweiß- oder Lötgeschwindigkeit gemäß Anspruch 1 gelöst.

Das terrestrische GPS (Global Position System) ist ein globales Navigationssatellitensystem zur Positions- und Zeitbestimmung. Dieses System ist bereits seit geraumer Zeit für zivile Zwecke zur Ortungsbestimmung einsetzbar, wobei typischerweise die Ortungsgenauigkeit in der Größenordnung von etwa 10 m liegt. Die Genauigkeit lässt sich durch Differenzmethoden, wie dGPS, auf Zentimeter steigern. Durch den Einsatz von "Indoor-GPS" kann zudem ein Messvolumen abgedeckt werden, das eine gesamte Werkzeughalle umfasst und dabei von der Genauigkeit bis in den Submillimeterbereich gesteigert werden kann.

Unter einem Arbeitskopf wird erfindungsgemäß derjenige Teil der Schweiß- oder Lötvorrichtung verstanden, über den während eines Schweiß- oder Lötvorganges die Schweiß- oder Lötenergie in die miteinander zu verschweißenden oder verlötenden Werkstücke eingebracht wird. Der Arbeitskopf kann beispielsweise durch eine Schweißzange ausgebildet sein, während er bei einem Lichtbogen-Schweißverfahren durch einen Brenner, an dem der Schweißdraht geführt ist, gebildet sein kann.

Als Schweiß- oder Lötprozess, bei dem das erfindungsgemäße Verfahren zum Ermitteln einer Schweiß- oder Lötgeschwindigkeit einsetzbar ist, kommt ein beliebiges Schweiß- oder Lötverfahren, wie beispielsweise ein Strahl-Schweißverfahren, ein Gasschmelz-Schweißverfahren oder ein Lichtbogen-Schweiß-verfahren, insbesondere ein Schutzgas-Lichtbogen-Schweißverfahren, in Betracht.

Gemäß einer vorteilhaften Ausführungsform der vorliegenden Erfindung wird die Schweiß- oder Lötgeschwindigkeit an eine Regelvorrichtung übermittelt, durch welche wenigstens ein Schweiß- oder Lötparameter der Schweiß- oder Lötvorrichtung in Abhängigkeit von der Schweiß- oder Lötgeschwindigkeit geregelt wird. Bei dieser Vorgehensweise kann der wenigstens eine Schweiß- oder Lötparameter dazu genutzt werden, Inhomogenitäten der Schweiß- oder Lötgeschwindigkeit auszugleichen und somit ein optimales Schweiß- oder Lötergebnis zur Verfügung zu stellen.

Hierbei ist es beispielsweise möglich, Werte von Kenngrößen des jeweiligen Schweiß- oder Lötverfahrens an die jeweils ermittelte Schweiß- oder Lötgeschwindigkeit anzupassen. Zu diesem Zweck können beispielsweise über eine an der Schweiß- oder Lötvorrichtung vorgesehene Bedieneinrichtung unterschiedliche Schweiß- oder Lötprogramme angewählt werden, in welchen den Kenngrößen des Schweiß- oder Lötverfahrens, beispielsweise der Amplitude des Schweißstromes, vorbestimmte Werte in Abhängigkeit von der ermittelten Schweiß- oder Lötgeschwindigkeit zugeordnet werden. Auf diese Weise kann ein jeweils optimiertes Schweiß- oder Lötprogramm für jede auszubildende Schweiß- oder Lötverbindung bzw. für die jeweilige Schweißaufgabe gebildet werden. Somit kann erfindungsgemäß die Qualität der jeweiligen Schweiß- oder Lötverbindung, wie von Schweißpunkten oder Schweißnähten, wesentlich erhöht werden.

Beispielsweise wird hierbei wenigstens einer der Schweiß- oder Lötparameter Strom, Spannung und Drahtfördergeschwindigkeit in Abhängigkeit von der ermittelten Schweiß- oder Lötgeschwindigkeit verändert. So kann beispielsweise beim Schweißen ein Schweißstrom, eine Schweißspannung und/oder eine Drahtfördergeschwindigkeit des Schweißdrahtes in Wechselwirkung mit der jeweils ermittelten Schweißgeschwindigkeit unter Berücksichtigung von Optimierungskriterien des Schweißprozesses modifiziert werden. Die erfindungsgemäß in Abhängigkeit von der ermittelten Schweiß- oder Lötgeschwindigkeit veränderbaren Schweiß- oder Lötparameter können dabei die Amplitude, die Signalform, insbesondere die Pulsform, die Pulsfrequenz und/oder die Pulsmodulatiuon eines Schweißstromes und/oder einer Schweißspannung als auch die Drahtförder- bzw. Drahtzuführgeschwindigkeit umfassen.

Ferner ist es auch möglich, anhand der ermittelten Schweiß- oder Lötgeschwindigkeit eine Anpresskraft wenigstens einer Schweißelektrode eines Brenners an eines der zu verschweißenden Werkstücke zu beeinflussen. Die Veränderung der Schweiß- oder Lötparameter kann sowohl manuell als auch automatisch durch eine Steuerung bzw. Regelung, kontinuierlich oder diskret erfolgen. Es ist auch möglich, die Zuordnung von Schweiß- oder Lötparametern zur ermittelten Schweiß- oder Lötgeschwindigkeit in Abhängigkeit von einem Kennlinienfeld vorzunehmen.

Dabei ist es günstig, wenn wenigstens einer der Schweiß- oder Lötparameter zur Einhaltung einer vorgebbaren Streckenenergie und/oder zur Einhaltung eines vorgebbaren a-Maßes verändert wird. Eine konstante vorgebbare Streckenenergie

$$E = \frac{U_s \cdot I_s}{v_s}$$

ist ein Optimierungskriterium für die Schweiß- und Lötqualität, wobei der Schweiß- oder Lötstrom $I_S$ und die Schweiß- oder Lötspannung $U_S$ mit der Schweiß- oder Lötgeschwindigkeit $v_S$ in Wechselwirkung zur Streckenenergie E stehen. Aus diesem Zusammenhang ist ersichtlich, dass die Streckenenergie E auch bei sich verändernder Schweiß- oder Lötgeschwindigkeit $v_S$ durch entsprechende Anpassung der Schweiß- oder Lötspannung bzw. des Schweiß- oder Lötstromes konstant oder nahezu konstant gehalten werden kann.

Um die Streckenenergie, also die pro Längeneinheit einer Schweißnaht in die zu verschweißenden Werkstücke eingebrachte Schweißenergie, konstant zu halten, kann beim Schweißen mit einer relativ geringen Geschwindigkeit des Schweißkopfes bzw. Brenners relativ zu den zu verschweißenden Werkstücken eine vorbestimmte Amplitude eines Schweißstromes gewählt werden, während beim Erhöhen der Geschwindigkeit die Amplitude des Schweißstromes erhöht wird.

Das für eine Schweiß- oder Lötaufgabe vorgegebene a-Maß stellt eine Maßangabe für den Schweiß- oder Lötnahtquerschnitt dar und errechnet sich aus dem Querschnitt des Zusatzmaterials $A_Z$, der Drahtfördergeschwindigkeit $v_d$ und der ermittelten Schweiß- oder Lötgeschwindigkeit $v_S$ über folgende Gleichung

$$a^2 = \frac{A_Z \cdot v_d}{v_s}$$

So kann ein vorgegebenes a-Maß bei sich verändernder Schweiß- oder Lötgeschwindigkeit $v_S$ beispielsweise durch eine Änderung der Drahtfördergeschwindigkeit $v_d$ ausgeglichen werden, sodass das a-Maß während des Schweiß- oder Lötvorganges konstant bzw. nahezu konstant eingehalten werden kann.

Es hat sich ferner als vorteilhaft erwiesen, wenn die Schweiß- oder Lötgeschwindigkeit und/oder ein in Abhängigkeit von der Schweiß- oder Lötgeschwindigkeit erzeugtes Warnsignal durch ein Anzeige- oder Warnsystem optisch oder akustisch ausgegeben wird. Dies kann beispielsweise bei einem manuellen Schweiß- oder Lötvorgang dazu genutzt werden, um den Schweißer oder Löter optisch oder akustisch darauf hinzuweisen, die Schweiß- bzw. Lötgeschwindigkeit entsprechend den jeweiligen Erfordernissen anzupassen. So kann beispielsweise dem Schweißer oder Löter durch ein optisches oder akustisches Signal angezeigt werden, dass ein anderes Schweiß- oder Lötprogramm an der jeweiligen Schweiß- oder Lötvorrichtung zu wählen ist.

Gemäß der vorliegenden Erfindung wird eine Temperatur eines während des Schweiß- oder Lötprozesses geschweißten oder gelöteten Werkstückes erfasst. Da die Werkstücktemperatur von der Schweiß- oder Lötgeschwindigkeit abhängig ist, kann diese im Zusammenhang mit der ermittelten Schweiß- oder Lötgeschwindigkeit dazu verwendet werden, um in Abhängigkeit davon Schweiß- oder Lötparameter, wie Strom, Spannung und/oder Drahtfördergeschwindigkeit, zu verändern, um Änderungen der Schweißgeschwindigkeit und damit der Werkstücktemperatur geeignet ausgleichen zu können. Auf diese Weise kann ein optimales Schweiß- oder Lötergebnis erzielt werden.

Die Aufgabe wird ferner durch eine Vorrichtung zum Ermitteln einer Schweiß- oder Lötgeschwindigkeit bei einem Schweiß- oder Lötprozess gemäss Anspruch 5 gelöst.

Gemäß der vorliegenden Erfindung weist das Sendesystem mehrere, in der Schweiß- oder Lötumgebung verteilte, fest installierte Sender als "Indoor-GPS"-System auf. Die Sender können beispielsweise an den Wänden einer Werkhalle verteilt angeordnet sein. Durch die Sender kann ein hochpräzises Zeitsignal über Infrarot-Laserimpulse ausgesandt werden, wodurch die Sender ein Koordinatensystem aufspannen, in dem der an oder in dem Arbeitskopf vorgesehene GPS-Empfänger das jeweilige Signal aufnehmen kann. Auf diese Weise kann durch den GPS-Empfänger dessen Position relativ zu den Sendern mit einer sehr hohen Präzision erfasst werden.

Gemäß einer bevorzugten Ausgestaltung der vorliegenden Erfindung ist die Datenverarbeitungseinheit mit einer Regelvorrichtung für wenigstens einen Schweiß- oder Lötparameter der Schweiß- oder Lötvorrichtung gekoppelt. Die Regelvorrichtung kann dabei in einer Energiequelle der Schweiß- oder Lötvorrichtung integriert oder eine separate Regelvorrichtung sein. Durch die Regelvorrichtung kann der wenigstens eine Schweiß- oder Lötparameter in Abhängigkeit von der jeweils ermittelten Schweiß- oder Lötgeschwindigkeit angepasst werden, um das Schweiß- oder Löterfgebnis zu optimieren. Die Regelvorrichtung kann sowohl manuell betätigbar als auch automatisch sein. Beispielsweise kann die Regelvorrichtung Regelmittel aufweisen, die anhand der ermittelten Schweiß- oder Lötgeschwindigkeit Kenngrößen des Verfahrens hinsichtlich ihrer Werte beeinflussen. Auf diese Weise kann die Bedienung der erfindungsgemäßen Vorrichtung wesentlich vereinfacht und die Qualität einer mittels einer erfindungsgemäßen Schweiß- oder Lötvorrichtung erzeugten Schweiß- oder Lötverbindung wesentlich erhöht werden. Vorzugsweise weist die Regelvorrichtung ein Regelmodul für wenigstens einen der Schweiß- oder Lötparameter Strom, Spannung und Drahtfördergeschwindigkeit auf. So können beispielsweise beim Schweißen der Schweißstrom, die Schweißspannung und/oder die jeweilige Drahtfördergeschwindigkeit an eine aktuell berechnete Schweißgeschwindigkeit angepasst werden, sodass beispielsweise voreingestellte Parameter wie eine vorgebbare Streckenenergie und/oder ein vorgebbares a-Maß eingehalten werden können.

In einer Weiterbildung der vorliegenden Erfindung ist die Datenverarbeitungseinheit mit einem optischen oder akustischen Anzeige- oder Warnsystem gekoppelt. So können bei Über- bzw. Unterschreiten einer voreingestellten Schweiß- oder Lötgeschwindigkeit optische oder akustische Anzeige- oder Warnsignale durch das Anzeige- oder Warnsystem ausgegeben werden, die den Schweißer oder Löter dazu veranlassen, die jeweilige Schweiß- oder Lötgeschwindigkeit zu ändern bzw. anzupassen.

Erfindungsgemäß ist die Vorrichtung mit einem Temperatursensor zum Erfassen einer Werkstücktemperatur gekoppelt. Da die Werkstücktemperatur in direktem Zusammenhang mit der jeweiligen Schweiß- oder Lötgeschwindigkeit steht, kann sie unterstützend zu der jeweils ermittelten Schweiß- oder Lötgeschwindigkeit dazu verwendet werden, die Schweiß- oder Lötparameter der Schweiß- oder Lötvorrichtung entsprechend anzupassen, um ein hochqualitatives Schweiß- oder Lötergebnis zu erzielen.

Die Aufgabe wird darüber hinaus durch eine Schweiß- oder Lötvorrichtung mit einer oben beschriebenen Vorrichtung zum Ermitteln einer Schweiß- oder Lötgeschwindigkeit gelöst.

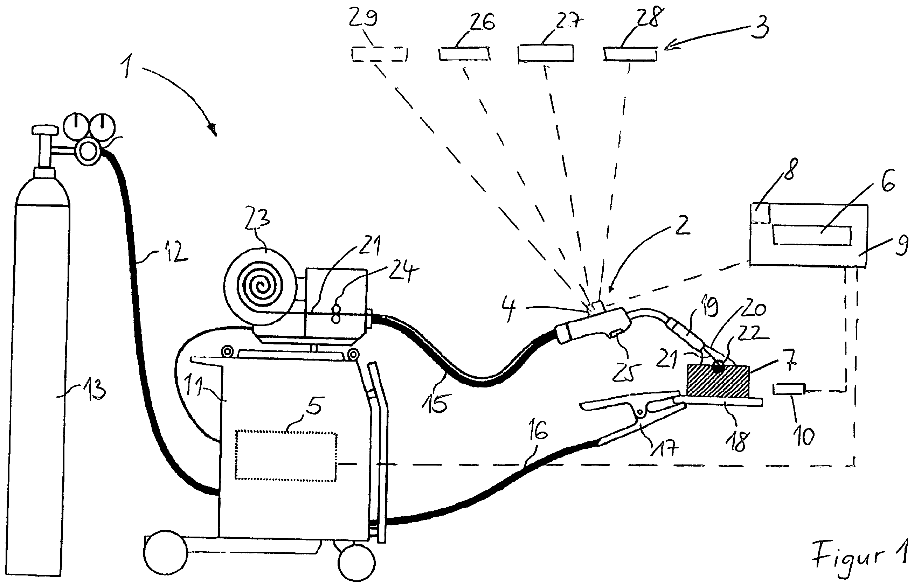

Das Prinzip und die Vorteile der vorliegenden Erfindung werden im Folgenden anhand von Figur 1, welche schematisch einen möglichen Grundaufbau einer erfindungsgemäßen Vorrichtung zur Ausführung des erfindungsgemäßen Verfahrens darstellt, näher erläutert.

Fig. 1 zeigt schematisch eine Schweißvorrichtung 1. Anstelle der gezeigten Schweißvorrichtung 1 kann erfindungsgemäß auch eine Lötvorrichtung verwendet werden. Die Schweißvorrichtung 1 weist eine Energiequelle 11 in Form einer Schweißstromquelle auf. Die Energiequelle 11 ist über eine Schutzgaszuführungsleitung 12 mit einem Schutzgasspeicher 13 verbunden, wobei das in dem Schutzgasspeicher 13 enthaltene Schutzgas über eine Armatur 14 an dem Schutzgasspeicher 13 einstellbar dem Schweißprozess zugeführt werden kann.

Mit der Energiequelle 11 ist ein Brenner 2 über ein Versorgungskabel 15 verbunden. Ferner ist die Energiequelle 11 über ein weiteres Versorgungskabel 16 mit einer Klemme 17 verbunden, welche an eine Werkstückauflage 18 geklemmt ist. Durch die Klemme 17 kann die Werkstückauflage 18 auf Masse gelegt werden. Auf der Werkstückauflage 18 befindet sich ein Werkstück 7, welches durch die Schweißvorrichtung 1 geschweißt wird. Hierfür weist der Brenner 2 eine Schweißelektrode 19 auf, durch welche zwischen der Schweißelektrode 19 und dem Werkstück 7 in dem in Fig. 1 gezeigten Ausführungsbeispiel ein Lichtbogen 20 erzeugt werden kann.

Zum Erzeugen einer Schweißnaht wird zudem während des Schweißens, wie es in Fig. 1 schematisch angedeutet ist, ein Schweißzusatzwerkstoff bzw. Schweißdraht 21 der Schweißstelle 22 zugeführt. Die Drahtzuführung erfolgt mittels einer Drahtzuführeinrichtung 23, von welcher der Draht 21 in Richtung des Brenners 2 abgezogen wird, wobei die Drahtfördergeschwindigkeit durch einen Drahtgeschwindigkeitsregler 24 bestimmt wird.

An einem festen Punkt an dem Brenner 2, wie beispielsweise am Brennergriff 25, ist wenigstens ein GPS-Empfänger 4 vorgesehen, der in Wechselwirkung mit wenigstens drei Sendern bzw. Satelliten 26, 27, 28 eines GPS-Sendesystems 3 steht. Die Sender 26, 27, 28 können beispielsweise an den Wänden einer Werkhalle oder an anderen geeigneten Positionen in einer Schweiß- oder Lötumgebung verteilt fest installiert oder positioniert sein. Die Sender 26, 27, 28 senden jeweils ein hochpräzises Zeitsignal über Infrarot-Laserimpulse aus. Auf diese Weise spannen die Sender 26, 27, 28 über der Schweiß- oder Lötumgebung ein Koordinatensystem auf, in dem der GPS-Empfänger 4 das jeweilige Signal aufnehmen kann.

Die Sender 26, 27, 28 strahlen ständig ihre aktuelle Position und die genaue Uhrzeit aus. Aus den Signallaufzeiten zu dem GPS-Empfänger 4 kann dieser daraufhin seine eigene Position mit einer Genauigkeit bis in den Submillimeterbereich berechnen. Hierzu reichen theoretisch die Signale von drei Sendern 26, 27, 28 aus, welche sich oberhalb ihres Abschaltwinkels befinden müssen, da daraus die genaue Position und Höhe bestimmt werden kann.

Der GPS-Empfänger 4 muss selbst keine eigene Uhr haben, die genau genug ist, um die Signallaufzeiten korrekt messen zu können. Deshalb kann das Signal eines vierten Senders bzw. Satelliten 29 verwendet werden, mit welchem dann auch die genaue Zeit in dem GPS-Empfänger 4 bestimmt werden kann.

Die Zeit kann jedoch auch hilfsweise durch eine mit dem GPS-Empfänger 4 gekoppelte Zeiterfassungseinheit 8 bestimmt werden, welche sich in dem in Fig. 1 dargestellten Ausführungsbeispiel in einer mit dem GPS-Empfänger 4 gekoppelten Datenverarbeitungseinheit 9 befindet.

Aus der jeweiligen Position und der Zeit kann eine Positionsänderung des Brenners 2 und damit auf die der Positionsänderung des Brenners 2 direkt proportionale Schweißgeschwindigkeit des Brenners 2 geschlossen werden. Die Schweißgeschwindigkeit wird erfindungsgemäß kontinuierlich erfasst, sodass auch Änderungen der Schweißgeschwindigkeit sofort erfasst werden. Änderungen der Schweißgeschwindigkeit führen jedoch, wie oben ausgeführt, zu Änderungen in der Qualität des Schweißergebnisses und damit der Qualität der Schweißnaht.

In der Datenverarbeitungseinheit 9 werden die von dem GPS-Empfänger 4 ermittelten und/oder errechneten Daten aufgenommen und weiterverarbeitet. So kann die Positionsänderung und damit die Geschwindigkeit des Brenners bereits durch den GPS-Empfänger 4, oder auch erst durch die Datenverarbeitungseinheit 9 errechnet werden.

In dem Beispiel von Fig. 1 weist die Datenverarbeitungseinheit 9 ferner ein Anzeige- oder Warnsystem 6 auf, in welchem aktuelle Brennergeschwindigkeitswerte und/oder Schweißgeschwindigkeitsunter- bzw. -überschreitungen optisch und/oder akustisch zur Anzeige gebracht werden können.

In der Ausführungsform von Fig. 1 ist die Datenverarbeitungseinheit 9 darüber hinaus mit einer Regelvorrichtung 5 an der Energiequelle 11 verbunden. Die Regelvorrichtung 5 kann in anderen, nicht gezeigten Ausführungsvarianten der vorliegenden Erfindung auch direkt mit dem GPS-Empfänger 4 gekoppelt sein.

Mithilfe der Regelvorrichtung 5 kann in Abhängigkeit von der jeweils ermittelten Schweißgeschwindigkeit wenigstens ein Schweißparameter verändert werden, um beispielsweise eine vorgegebene Streckenenergie und/der ein vorgegebenes a-Maß für den Schweißprozess einhalten zu können. Als Schweißparameter, die durch die Regelvorrichtung 5 geregelt werden können, kommen beispielsweise ein Schweißstrom, eine Schweißspannung und/oder eine Drahtfördergeschwindigkeit des Schweißdrahtes 21 in Betracht. So kann beispielsweise durch die Regelvorrichtung 5 nicht nur die Höhe des Schweißstroms sondern auch die Höhe, Breite und Frequenz einzelner Schweißstromimpulse in Abhängigkeit von der ermittelten Schweißgeschwindigkeit verändert werden. Zudem kann die Regelvorrichtung 5 in der in Fig. 1 dargestellten Ausführungsvariante direkt den Drahtgeschwindigkeitsregler 24 beeinflussen, um die Drahtfördergeschwindigkeit des Drahtes 21 an die jeweilige Schweißgeschwindigkeit anzupassen.

In dem Ausführungsbeispiel von Fig. 1 ist die Datenverarbeitungseinheit 9 zudem mit einem nahe dem Werkstück 7 angeordneten Temperatursensor 10 gekoppelt, welcher die Temperatur des Werkstückes 7 kontinuierlich während des Schweißprozesses erfasst. Da die Temperatur des Werkstückes 7 ebenfalls von der jeweiligen Schweißgeschwindigkeit abhängig ist, kann die durch den Temperatursensor 10 ermittelte Werkstücktemperatur gemeinsam mit der ermittelten Schweißgeschwindigkeit zur Regelung wenigstens eines der Schweißparameter Schweißstrom, Schweißspannung und/oder Drahtfördergeschwindigkeit in der Regelvorrichtung 5 verwertet werden.

Wie bereits oben ausgeführt, kann die in Fig. 1 dargestellte Anordnung zum Ermitteln der Schweißgeschwindigkeit auch analog auf eine Vorrichtung und ein Verfahren zum Ermitteln einer Lötgeschwindigkeit bei einer Lötvorrichtung eingesetzt werden. Somit steht erfindungsgemäß eine Vorrichtung und ein Verfahren zum Ermitteln einer Schweiß- oder Lötgeschwindigkeit bei einem Schweiß- oder Lötprozess zur Verfügung, die es ermöglichen, die jeweilige Schweiß- oder Lötgeschwindigkeit mit geringem konstruktiven Aufwand aber sehr hoher Genauigkeit zu erfassen, um diese unmittelbar zur Optimierung des Schweiß- oder Lötprozesses und damit des Schweiß- oder Lötergebnisses einsetzen zu.

**Patentansprüche**

1. Verfahren zum Ermitteln einer Schweiß- oder Lötgeschwindigkeit bei einem Schweiß- oder Lötprozess mit einer einen Arbeitskopf, wie einen Brenner (2) oder eine Schweißzange, aufweisenden Schweiß- oder Lötvorrichtung (1), wobei eine Schweiß- oder Lötgeschwindigkeit ermittelt wird, eine Temperatur eines während des Schweiß- oder Lötprozesses geschweißten oder gelöteten Werkstückes (7) erfasst wird und die Schweiß- und Lötgeschwindigkeit und die Temperatur des geschweißten oder gelöteten Werkstückes (7) an eine Regelvorrichtung (5) übermittelt wird, durch welche wenigstens ein Schweiß- oder Lötparameter der Schweiß- oder Lötvorrichtung (1) in Abhängigkeit von der Schweiß- oder Lötgeschwindigkeit und der Temperatur des geschweißten oder gelöteten Werkstückes (7) geregelt wird, **dadurch gekennzeichnet, dass** eine Positionsänderung des Brenners (2) durch ein Sendesystem (3) mit mehreren, in einer Schweiß- oder Lötumgebung verteilten, fest installierten, Infrarot-Laserimpulse aussendenden Sendern (26, 27, 28) und einem an oder in dem Arbeitskopf vorgesehenen Empfänger (4) pro Zeit ermittelt wird und daraus die jeweilige Schweiß- oder Lötgeschwindigkeit ermittelt wird.

2. Verfahren nach Anspruch 1, **dadurch gekennzeichnet, dass** wenigstens einer der Schweiß- oder Lötparameter Strom, Spannung und Drahtfördergeschwindigkeit in Abhängigkeit von der ermittelten Schweiß- oder Lötgeschwindigkeit und der Temperatur des geschweißten oder gelöteten Werkstückes (7) verändert wird.

3. Verfahren nach Anspruch 1 oder 2, **dadurch gekennzeichnet, dass** wenigstens einer der Schweiß- oder Lötparameter zur Einhaltung einer vorgebbaren Streckenenergie und/oder zur Einhaltung eines vorgebbaren a-Maßes verändert wird.

4. Verfahren nach einem der vorhergehenden Ansprüche, **dadurch gekennzeichnet, dass** die Schweiß- oder Lötgeschwindigkeit und/oder ein in Abhängigkeit von der Schweiß- oder Lötgeschwindigkeit erzeugtes Warnsignal durch ein Anzeige- oder Warnsystem (6) optisch oder akustisch ausgegeben wird.

5. Vorrichtung zum Ermitteln einer Schweiß- oder Lötgeschwindigkeit bei einem Schweiß- oder Lötprozess mit einer einen Arbeitskopf, wie einen Brenner (2) oder eine Schweißzange, aufweisenden Schweiß- oder Lötvorrichtung (1), wobei die Vorrichtung eine Datenverarbeitungseinheit (9) zum Ermitteln der jeweiligen Schweiß- oder Lögeschwindigkeit aufweist, die Datenverarbeitungseinheit (9) mit einem Temperatursensor (10) zum Erfassen einer Werkstücktemperatur gekoppelt ist, die durch den Temperatursensor (10) ermittelte Werkstücktemperatur an eine Regelvorrichtung (5) übermittelbar ist, und die Datenverarbeitungseinheit (9) mit einer Regelvorrichtung (5) für wenigstens einen Schweiß- oder Lötparameter der Schweiß- oder Lötvorrichtung (1) gekoppelt ist, **dadurch gekennzeichnet, dass** die Vorrichtung einen in oder an dem Arbeitskopf vorgesehenen und mit einem Sendesystem (3) gekoppelten Empfänger (4) aufweist, wobei das Sendesystem (3) mehrere, in einer Schweiß- und Lötumgebung verteilte, fest installierte, Infrarot-Laserimpulse aussendende Sender (26, 27, 28) aufweist.

6. Vorrichtung nach Anspruch 5, **dadurch gekennzeichnet, dass** die Datenverarbeitungseinheit (9) eine separate oder in dem Empfänger (4) vorgesehene Datenverarbeitungseinheit (9) ist.

7. Vorrichtung nach Anspruch 5 oder 6, **dadurch gekennzeichnet, dass** die Regelvorrichtung (5) ein Regelmodul für wenigstens einen der Schweiß- oder Lötparameter Strom, Spannung und Drahtfördergeschwindigkeit aufweist.

8. Vorrichtung nach einem der Ansprüche 5 bis 7, **dadurch gekennzeichnet, dass** die Datenverarbeitungseinheit (9) oder der Empfänger (4) mit einem optischen oder akustischen Anzeige- oder Warnsystem (6) gekoppelt ist.

9. Schweiß- oder Lötvorrichtung mit einer Vorrichtung zum Ermitteln einer Schweiß- oder Lötgeschwindigkeit nach einem der Ansprüche 5 bis 8.

## Claims

1. Method for determining a welding- or brazing speed during a welding- or brazing process with a welding- or brazing device (1) comprising a tool head, as well as a burner (2) or a welding tong, wherein a welding- or brazing speed is determined, a temperature of a work piece (7) being welded or brazed during a welding- or brazing process is recorded and the welding- or brazing speed and the temperature of the welded or brazed work piece (7) is transmitted to a controller (5) through which at least one welding- or brazing parameter of the welding- or brazing device (1), depending on the welding- or brazing speed and the temperature of the welded or brazed work piece (7), is controlled, **characterized in that** a change of position of the burner (2) is determined per time by a broadcast system (3) comprising several, spread in a welding- or brazing surrounding, permanently installed transmitters (26, 27, 28) emitting infrared laser impulses and a receiver (4) provided on or in the tool head and as a result the respective welding- or brazing speed is determined.

2. Method according to claim 1, **characterized in that** at least one of the welding- or brazing parameters electricity, voltage and wire speed depending on the determined welding- or brazing speed and temperature of the welded or brazed working piece (7) is changed.

3. Method according to claims 1 and 2, **characterized in that** at least one of the welding- or brazing parameters is changed in order to maintain a definable arc energy and/or in order to maintain a definable fillet weld thickness.

4. Method according to one of the preceding claims, **characterized in that** the welding- or brazing speed and/or a warning signal produced depending on the welding- or brazing speed, is issued optically or acoustically by a display- or warning system (6).

5. Device for determining a welding- or brazing speed during a welding- or brazing process with a welding- or brazing device (1) comprising a tool head as well as a burner (2) or a welding tong, wherein the device comprises a data processing unit (9) for determining the respective welding- or brazing speed, the data processing unit (9) is linked to a temperature sensor (10) for recording a working piece temperature, the working piece temperature determined by the temperature sensor (10) can be transmitted to a controller (5), and the data processing unit (9) alongside a controller (5) is linked to the welding- or brazing device (1) for at least one welding- or brazing parameter, **characterized in that** the device comprises a receiver (4) provided in or on the tool head and linked to a broadcast system (3), wherein the broadcast system (3) comprises several, spread in a welding- or brazing surrounding, permanently installed transmitters (26, 27, 28) emitting infrared laser impulses.

6. Device according to claim 5, **characterized in that** the data processing unit (9) is a separate or a data processing unit (9) provided in the receiver (4).

7. Device according to claim 5 or 6, **characterized in that** the controlling device (5) comprises a control module for at least one of the welding- or brazing parameters electricity, voltage and wire speed.

8. Device according to one of the claims 5 to 7, **characterized in that** the data processing unit (9) or the receiver (4) is linked to an optical or acoustic display- or warning system (6).

9. Welding- or brazing device comprising a device for determining a welding- or brazing speed according to one of the claims 5 to 8.

**Revendications**

1. Procédé destiné à la détermination d'une vitesse de soudure ou de brasure lors d'un procédé de soudure ou de brasure, avec un dispositif de soudure ou de brasure (1) présentant une tête de travail, tel qu'un brûleur (2) ou un pistolet à soudure, dans lequel une vitesse de soudure ou de brasure est déterminée, une température d'une pièce à usiner (7) soudée ou brasée est prélevée pendant le procédé de soudure ou de brasure et la vitesse de soudure ou de brasure et la température de la pièce à usiner (7) soudée ou brasée sont transmises à un dispositif de régulation (5), par l'intermédiaire duquel au moins un paramètre de soudure ou de brasure du dispositif de soudure ou de brasure (1) est régulé en fonction de la vitesse de soudure ou de brasure et de la température de la pièce à usiner (7) soudée ou brasée, **caractérisé en ce qu'**une modification de la position du brûleur (2) est déterminée par le temps, par l'intermédiaire d'un système d'émission (3) doté de plusieurs émetteurs (26, 27, 28) fixes, qui émettent des impulsions laser infrarouge et sont répartis dans un environnement de soudure ou de brasure, et d'un récepteur (4) prévu au niveau de ou dans la tête de travail, et à partir de laquelle modification, la vitesse respective de soudure ou de brasure est déterminée.

2. Procédé selon la revendication 1, **caractérisé en ce qu'**au moins l'un des paramètres de soudure ou de brasure, parmi lesquels le courant, la tension et la vitesse d'avance du fil à souder, est modifié en fonction de la vitesse de soudure ou de brasure déterminée et de la température de la pièce à usiner (7) soudée ou brasée.

3. Procédé selon la revendication 1 ou 2, **caractérisé en ce qu'**au moins l'un des paramètres de soudure ou de brasure est modifié en vue de maintenir une énergie de soudage pouvant être prédéterminée et/ou en vue de maintenir une mesure « a » pouvant être prédéterminée.

4. Procédé selon l'une des revendications précédentes, **caractérisé en ce que** la vitesse de soudure ou de brasure et/ou un signal d'avertissement généré en fonction de la vitesse de soudure ou de brasure sont émis de manière optique ou acoustique par un système d'alarme ou d'affichage (6).

5. Dispositif destiné à la détermination d'une vitesse de soudure ou de brasure lors d'un procédé de soudure ou de brasure, avec un dispositif de soudure ou de brasure (1) présentant une tête de travail, tel qu'un brûleur (2) ou un pistolet à soudure, dans lequel le dispositif présente une unité de traitement des données (9) destinée à la détermination de la vitesse de soudure ou de brasure respective, l'unité de traitement des données (9) est couplée à une sonde de température (10) destinée à la saisie d'une température d'une pièce à usiner, la température de la pièce à usiner déterminée par la sonde de température (10) peut être transmise à un dispositif de régulation (5), et l'unité de traitement des données (9) est couplée à un dispositif de régulation (5) pour au moins un paramètre de soudure ou de brasure du dispositif de soudure ou de brasure (1), **caractérisé en ce que** le dispositif présente un récepteur (4), prévu dans ou au niveau de la tête de travail et couplé à un système d'émission (3), dans lequel le système d'émission (3) présente plusieurs émetteurs (26, 27, 28) fixes qui émettent des impulsions laser infrarouge et sont répartis dans un environnement de soudure ou de brasure.

6. Dispositif selon la revendication 5, **caractérisé en ce que** l'unité de traitement des données (9) est une unité de traitement des données (9) séparée ou prévue dans le récepteur (4).

7. Dispositif selon la revendication 5 ou 6, **caractérisé en ce que** le dispositif de régulation (5) présente un module de régulation pour au moins l'un des paramètres de soudure ou de brasure parmi lesquels le courant, la tension et la vitesse d'avance du fil à souder.

8. Dispositif selon l'une des revendications 5 à 7, **caractérisé en ce que** l'unité de traitement des données (9) ou le récepteur (4) est couplé(e) à un système d'alarme ou d'affichage (6) optique ou acoustique.

**9.** Dispositif de soudure ou de brasure avec un dispositif destiné à la détermination d'une vitesse de soudure ou de brasure selon l'une des revendications 5 à 8.

Figur 1

**EP 2 292 363 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1077784 B1
- EP 08103967 A1
- WO 2007009131 A1
- EP 2022592 A1
- US 4399346 A
- JP 63290685 A
- DD 142677 A1
- EP 1812200 B1